Europäisches Patentamt

European Patent Office

Office européen des brevets

(11) Veröffentlichungsnummer: **0 062 265 B2**

(19)

(12) **NEUE EUROPÄISCHE PATENTSCHRIFT**

(45) Veröffentlichungstag der neuen Patentschrift:
30.03.88

(21) Anmeldenummer: **82102589.7**

(22) Anmeldetag: **27.03.82**

(51) Int. Cl.⁴: **G 11 B 5/41**

(54) Reinigungsband für Magnetköpfe.

(30) Priorität: **08.04.81 DE 8110630 U**

(43) Veröffentlichungstag der Anmeldung:
**13.10.82 Patentblatt 82/41**

(45) Bekanntmachung des Hinweises auf die Patenterteilung:
**10.07.85 Patentblatt 85/28**

(45) Bekanntmachung des Hinweises auf die Entscheidung
über den Einspruch:
**30.03.88 Patentblatt 88/13**

(84) Benannte Vertragsstaaten:
**AT DE FR GB IT NL**

(56) Entgegenhaltungen:
**DE - A - 2 301 533**
**DE - A - 2 536 085**
**DE - A - 2 556 919**
**DE - A - 3 008 137**
**GB - A - 1 475 938**
**GB - A - 1 599 458**
**US - A - 3 931 643**
**US - A - 3 931 643**

**Römpps, Chemie-Lexikon, 7. Aufl. 1975, insbes. S. 2751**

(73) Patentinhaber: **Agfa-Gevaert AG, Patentabteilung,
D-5090 Leverkusen 1 (DE)**

(72) Erfinder: **Thiele, Hartmut, Herterichstrasse 83,
D-8000 München 71 (DE)**

## Beschreibung

Die Neuerung betrifft ein Reinigungsband für Magnetköpfe, insbesondere auch für Videobänder.

In Tonbandrekordern und Videoaufzeichnungs- und Wiedergabegeräten kommt es nach längerem Spielbetrieb zur Verunreinigung der Wandlerköpfe, an denen sich Staub oder abgelöste magnetische Teilchen niederschlagen. Dies kann sich in einer Verschlechterung der Aufnahme- oder Wiedergabequalität auswirken. Die Verunreinigungen können auch auf die Bandführungsrollen und Antriebsachsen übertragen werden und so zu einer weiteren Verschlechterung der Ton- oder Bildqualität führen. Zur Reinigung der Kopfoberfläche werden bisher Reinigungsspray oder -Flüssigkeiten, die Lösungsmittel, fluorierte Kohlenwasserstoffe u.ä. enthalten, eingesetzt. In Kompaktkassetten werden vor allem Vorlaufbänder mit aufgerauhter Oberfläche durch Verwendung von mattierten Schichtträgern oder von aufgeklebten Vliespapieren verwendet. Solche Vorlaufbänder sind beispielsweise in US 3 823 947, GB 1 482 410 und DT-GM 7 503 495 und 7 640 316 beschrieben.

Darüber hinaus ist es ferner bekannt, für Videorekorder Kassetten mit Reinigungsbänder, die mit Schleifpartikeln überzogen sind, einzusetzen. Da die Teilchen eine hohe Härte aufweisen, wird auch sehr leicht die Magnetkopfoberfläche zerkratzt. Um dies zu vermeiden, hat man zur Reinigung Vliespapiere, die mit alkoholischer Lösung getränkt werden (DT-GM 7 301 138), oder wie in DE-OS 2 441 755 beschrieben, ein auf einen Schichtträger aufgebrachtes Japanpapier aus Pflanzenfaser mit einer Länge von 5–50 mm verwendet. Es zeigt sich, dass zwar keine Verkratzungserscheinungen auftreten, aber eine optimale Aufnahme von Bandabrieb oder Staub ist auch nicht erreichbar, da die gleichmässige Dosierung der alkoholischen Lösung oder eine gleichmässige Struktur der natürlichen Fasern nicht gewährleistet ist. In ähnlicher Weise besteht der in DE-A 2 556 919 beschriebene Reinigungsbogen zur Reinigung eines Magnetkopfes für flexible Scheiben unter anderem aus nichtgewebten Materialien oder aus gewebten Fasern aus Naturfaser und Japanpapier. Zur Verhinderung der Verschmutzung des Magnetkopfes soll in all den Fällen das Fasermaterial mit Silikonöl, Fluoröl imprägniert sein. Eine derartige Imprägnierung führt aber zu einer allmählichen Verschmierung bzw. Kontaktabnahme des Kopfes mit dem Magnetband.

Eine Verbesserung des Reinigungseffekts ist daher die Aufgabe, die neuerungsgemäss dadurch gelöst wurde, dass das Vlies aus thermisch gebundener, bindemittelfreier und endlos gesponnener Polyesterfaser aus Polyethylenglykolterephthalat mit längsorientierter Faserstruktur besteht und ein Flächengewicht zwischen 20–40 g/m² besitzt.

Der Vliesstoff besteht aus einer 100%igen Polyethylenglykolterephthalatfaser und besitzt ein Flächengewicht zwischen 20 und 40 g/m². Der Vliesstoff kann mit dem flexiblen Schichtträger durch Kaschieren oder Kleben verbunden sein. Als Schichtträger eignen sich Polyester, wie Polyethylenterephthalat, Cellulosederivate, wie Cellulosetriacetat, Celluloseacetatpropionat, Polycarbonat und dergl. Die Dicke des Vliesstoffes beträgt im allgemeinen zwischen 0,04 und 0,05 mm und die des Schichtträgers zwischen 0,02 und 0,03 mm.

Das wesentliche Merkmal der Neuerung besteht darin, dass mit dem Reinigungsband die Oberfläche eines Magnetkopfes nicht zerkratzt wird und durch das Band selbst keine Abriebprobleme entstehen, da das Vlies aus endlos gesponnener Polyesterfaser besteht.

Da Videorekorder für bestimmte Systeme mit Fotozellen abgeschaltet werden, ist der Schichtträger in diesen Fällen ein- oder beidseitig mit schwarzen Lacken beschichtet. Ein derartiges Reinigungsband kann bei allen Audio-, wie auch bei allen Videorekordern eingesetzt werden.

Der Reinigungseffekt wurde durch nachstehende Messung überprüft.

Auf einem ½″-Videorekorder wurde ein neuerungsgemässes und ein handelsübliches Reinigungsband in einer Kassette aufgelegt. Die Bänder wurden zwischen 10 sec und 5 min abgespielt. Die Messungen mit einem Bezugsband ergaben für das handelsübliche Band bereits bei 10 sec Empfindlichkeitsverluste von −0,5 dB, die bei 5 min auf −5 dB anwuchsen. Beim neuerungsgemässen Band war erst bei 5 min ein Verlust von −0,5 dB festzustellen.

## Patentanspruch

1. Reinigungsband für Magnetköpfe bestehend aus einem flexiblen Schichtträger und einer Reinigungsschicht aus einem Vliesstoff aus Polyesterfasern, dadurch gekennzeichnet, dass das Vlies aus thermisch gebundener, bindemittelfreier und endlos gesponnener Polyesterfaser aus Polyethylenglykolterephthalat mit längsorientierter Faserstruktur besteht und ein Flächengewicht zwischen 20–40 g/m² besitzt.

## Claim

1. Cleaning tape for magnetic heads consisting of a flexible layer support and a cleaning layer of a nonwoven fabric of polyester fibres, characterised in that the nonwoven fabric consists of heatbonded binder-free and continuously spun polyester fibre of polyethylene glycol terephthalate having a longitudinally oriented fibre structure, and has a weight per unit area between 20–40 g/m².

## Revendication

1. Bande nettoyante pour têtes magnétiques, comprenant un support de couche flexible et une couche nettoyante en un feutre en fibres de polyester, caractérisée par le fait que le feutre consiste en des fibres polyester en téréphtalate de polyéthylène-glycol liées thermiquement, exemptes de liant et filées sans fin, avec une structure fibreuse à orientation longitudinale et possède un poids superficiel compris entre 20 et 40 g/m².